# EUROPÄISCHE PATENTSCHRIFT

(11) **EP 3 431 539 B1**
(45) Veröffentlichungstag und Bekanntmachung des Hinweises auf die Patenterteilung: **21.05.2025**
(21) Anmeldenummer: 18178041.2
(22) Anmeldetag: 15.06.2018
(51) Int. Cl.: C08K 5/151, C08K 5/29, C08L 67/02, C08L 79/08

(54) **ZUSAMMENSETZUNGEN ENTHALTEND POLYMERES CARBODIIMID, EPOXID UND POLYESTERBASIERTE POLYMERE, DEREN HERSTELLUNG UND VERWENDUNG**
COMPOSITIONS CONTAINING POLYMERIC CARBODIIMIDE, EPOXIDE AND POLYESTER-BASED POLYMERS, THEIR PREPARATION AND USE
COMPOSITIONS CONTENANT UN POLYMÈRE CARBODIIMIDE, UN ÉPOXYDE ET DES POLYMÈRES À BASE DE POLYESTER, LEURS FABRICATION ET UTILISATION

(30) Priorität: 17.07.2017 EP 17181680
(43) Veröffentlichungstag der Anmeldung: 23.01.2019
(73) Patentinhaber: LANXESS Deutschland GmbH, 50569 Köln (DE)
(72) Erfinder: LAUFER, Wilhelm, 67158 Ellerstadt (DE); NEUWALD, Boris, 50733 Köln (DE); BIENMÜLLER, Matthias, 47803 Krefeld (DE)

(56) Entgegenhaltungen:
- EP-A1- 1 591 486
- EP-A1- 1 710 277
- DE-A1- 10 349 168
- US-A1- 2014 058 015

## Beschreibung

Die vorliegende Erfindung betrifft Zusammensetzungen enthaltend polymeres Carbodiimid, Epoxid und Polyester-basierte Polymere, deren Herstellung und Verwendung zum Hydrolyseschutz.

Diverse Carbodiimide haben sich in vielen Anwendungen bewährt, z.B. als Hydrolyseschutzmittel für thermoplastische Kunststoffe, Ester-basierte Polyole, Polyurethane, Triglyceride und Schmierstofföle etc. Sie haben allerdings den Nachteil der Emission von gesundheitsbedenklichen Gasen und sind teuer und aufwändig in der Herstellung.

Epoxide sind preiswerter in der Herstellung, haben jedoch den Nachteil, dass diese auch in sehr hohen Konzentrationen nicht die hydrolysestabilisierende Wirkung der Carbodiimide erreichen. Sie wirken lediglich als Säurefänger und führen nur ungenügend zu einer Langzeitstabilisierung bei höheren Temperaturen. Besonders in sehr anspruchsvollen Anwendungen unter Bedingungen, wie hoher Luftfeuchtigkeit und Temperatur versagen diese in Ihrer Wirkung als Hydrolyseschutzmittel, da in der Regel die esterbasierten Kunststoffe bei Temperaturen oberhalb von 200 °C verarbeitet werden. In DE 10349168 A1 wird ein Hydrolyseschutzmittel aus epoxidierten Fettsäureestern und -glyceriden, sowie einer Mischung aus diesen mit einem monomeren Carbodiimid beschrieben. Die hier beschriebenen Stabilisatoren wirken als Säurefänger in Ölen. Diese zeigen jedoch unter den oben genannten Bedingungen bei der Bearbeitung von Ester-basierten thermoplastischen Kunstoffen keine oder nur eine ungenügende Wirkung in der Langzeitstabilität gegen Hydrolyse. Weiterhin führt der Einsatz von monomeren Carbodiimiden zu einer verstärkten Emission giftiger Gasen.

EP 1 710 277 A1 offenbart hydrolysebeständige Polyester-Elastomerzusammensetzungen mit einem polymeren aromatischen Carbodiimid, einem alicyclischen Epoxid und einem thermoplastischen Polyester-Elastomer.

Aufgabe der vorliegenden Erfindung war es daher, neue kostengünstige Zusammensetzungen bereitzustellen, die hydrolyse-beständig sind, kostengünstig herstellbar sind und eine reduzierte Emission zeigen.

Überraschenderweise wurde nun gefunden, dass die vorgenannte Aufgabe dann erfüllt werden kann, wenn eine Kombination aus mindestens einem polymeren aromatischen Carbodiimid, mindestens einem Epoxid mit mindestens 2 Epoxidgruppen und mindestens einem Polyester-basierten Polymer, insbesondere einem Polyalkylenterephthalat oder Polylactid, eingesetzt wird.

Gegenstand der vorliegenden Erfindung sind daher Zusammensetzungen, enthaltend
(a) mindestens ein polymeres aromatisches Carbodiimid, der Formel (I)

   R¹-R²-(-N=C=N-R²-)ₘ-R¹ (I),

   in dem
   m einer ganzen Zahl von 2 bis 500, bevorzugt 3 bis 20, ganz besonders bevorzugt 4 bis 10 entspricht,
   R² für C₁-C₁₂-Alkyl-substituierte Arylene, C₇-C₁₈-Alkylaryl-substituierte Arylene, sowie Arylen steht, vorzugsweise 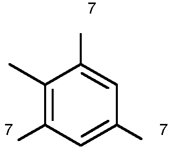
   R⁶, R⁷ und R⁸ jeweils unabhängig für Methyl- oder Ethyl steht, wobei jeder Benzolring nur eine Methyl-Gruppe aufweist und n = 1 bis 10
      und
   R¹ -NCO, -NCNR³-NHCONHR³, -NHCONR³R⁴ oder -NHCOOR⁵ ist,
   wobei R³ und R⁴ gleich oder verschieden sind und einen C₁-C₁₂-Alkyl-, C₆-C₁₂-Cycloalkyl-, C₇-C₁₈-Aralkyl- oder Arylrest darstellen und R⁵ einem C₁-C₂₂- Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder ein Alkoxypolyoxyalkylenrest entspricht,
(b) mindestens ein Epoxid, der nachfolgenden Formel (III) und/oder mindestens ein Epoxid der nachfolgenden Formel (IV).
(c) mindestens ein thermoplastisches Polyester-basiertes Polymer.

Der Begriff Arylen umfasst dabei insbesondere Phenylen-, Naphthylen- Anthrylen- und/oder Phenanthrylen-Reste, vorzugsweise Phenylenreste.

Bei den polymeren aromatischen Carbodiimiden a) handelt es sich vorzugsweise um Verbindungen der Formel (II), 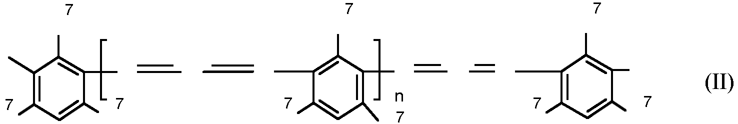
bei denen R¹ ausgewählt ist aus der Gruppe -NCO, -NHCONHR³, -NHCONR³R⁴ oder -NHCOOR⁵,
wobei R³ und R⁴ gleich oder verschieden sind und einen C₁-C₁₂-Alkyl-, C₆-C₁₂-Cycloalkyl-, C₇-C₁₈-Aralkylrest- oder Arylrest darstellen,
R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen, bevorzugt 12 - 20, besonders bevorzugt 16 - 18 Kohlenstoffatomen, oder einem Alkoxypolyoxyalkylenrest entspricht, und
R⁶, R⁷ und R⁸ jeweils unabhängig für Methyl- oder Ethyl steht, wobei jeder Benzolring nur eine Methyl-Gruppe aufweist und n = 1 bis 10 bedeutet.

Der Carbodiimid-Gehalt (NCN-Gehalt, gemessen durch Titration mit Oxalsäure) der erfindungsgemäß eingesetzten Carbodiimide der Formel (II) liegt vorzugsweise bei 2 - 14 Gew.%, bevorzugt bei 4 - 13 Gew.%, besonders bevorzugt bei 6 - 12 Gew.%.

Die erfindungsgemäß eingesetzten Carbodiimide der Formel (II) weisen darüber hinaus vorzugsweise mittlere Molmassen (Mw) von 1000 - 5000 g/mol, bevorzugt 1500 - 4000 g/mol, besonders bevorzugt 2000 - 3000 g/mol auf, bestimmt mittels GPC-Viskometrie.

Weiterhin sind Carbodiimide der Formel (II) bevorzugt, die eine Polydispersität D = Mw/Mn von 1,2 - 2,2, besonders bevorzugt von 1,4 - 1,8 aufweisen.

Bei den Carbodiimiden handelt vorzugsweise es sich um kommerziell verfügbare Verbindungen wie z.B. die polymeren Carbodiimiden mit dem Namen Stabaxol^{®} der Fa. Lanxess Deutschland GmbH. Sie können aber auch beispielsweise nach den in der EP14191710.4 beschriebenen Verfahren hergestellt werden.

Bevorzugt weist die Komponente b) insgesamt mindestens zwei Epoxid-Gruppen pro Molekül auf, wobei vorzugsweise wenigstens eine Epoxid-Gruppe endständig ist.

Die Herstellung **epoxidierter Verbindungen** ist dem Fachmann ebenfalls bekannt. Bevorzugte epoxidierte Verbindungen sind Polyglycidyl- oder Poly-(beta-methylglycidyl)-ether, vorzugsweise erhältlich durch Umsetzung einer Verbindung mit mindestens zwei freien alkoholischen oder phenolischen Hydroxygruppen und / oder durch Umsetzung von phenolischen Hydroxygruppen mit einem substituierten Epichlorhydrin.

Bevorzugte Polyglycidyl- oder Poly-(beta-methylglycidyl)-ether leiten sich ab von acyclischen Alkoholen, insbesondere Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimetylpropan, Bistrimethylolpropan, Pentaerythrit, Sorbit sowie von Polyepichlorhydrinen.

Alternativ bevorzugte Polyglycidyl- oder Poly-(beta-methylglycidyl)-ether leiten sich ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en, oder sie besitzen aromatische Kerne basierend auf N,N-Bis-8,2-hydroxyethyl)-anilin oder p,p'-Bis-(2-hydroxyethyl-amino)-diphenylmethan.

Bevorzugte epoxidierte Verbindungen basieren zudem auf einkernigen Phenolen, auf mehrkernigen Phenolen.

Bevorzugte einkernige Phenole sind Resorcin oder Hydrochinon.

Bevorzugte mehrkernige Phenole sind Bis-(4hydroxyphenyl)-methan, 2,2-Bis-(4-hydroxyphenyl)-propan, 2,2-Bis-(3,5-dibrom-4-hydroxyphenyl)-propan oder 4,4'-Dihydroxydiphenylsulfon.

Bevorzugte Kondensationsprodukte von Phenolen mit Formaldehyd sind Phenol-Novolake.

Bevorzugte aromatische Epoxid-Verbindungen weisen 2 endständige Epoxid-Funktionen auf.

Bevorzugte aromatische Epoxid-Verbindung mit 2 endständigen Epoxid-Funktionen ist ein oligomeres Reaktionsprodukt aus Bisphenol A mit Epichlorhydrin mit einem gemäß EN ISO 10927 mittleren Molekulargewicht im Bereich von 900 bis 1200 g/mol und einem Epoxy Index (nach ISO 3001) im Bereich von 450 bis 600 Gramm pro Äquivalent. Besonders bevorzugt handelt es sich bei Komponente c) um ein oligomeres Reaktionsprodukt aus Bisphenol A mit Epichlorhydrin der Formel (III), 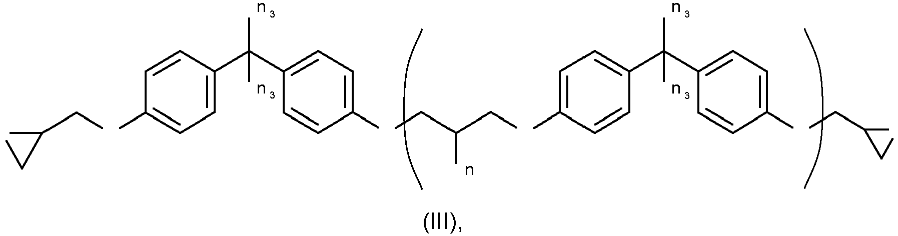 mit a von 0 bis 10, vorzugsweise mit a von 1 bis 8, besonders bevorzugt mit a von 1 bis 6, besonders bevorzugt im Bereich von 2 bis 3, wobei a der durchschnittlichen Anzahl entspricht.

Vorzugsweise werden die Komponenten c) nach einem Verfahren gemäß US2002/0128428 A1 hergestellt und weisen dann gemäß EN ISO 10927 ein mittleres Molekulargewicht im Bereich von 900 bis 1200 g/mol (entspricht in der Formel (III) einem a im Bereich von 2 bis 3) und einem Epoxy Index (nach ISO 3001) im Bereich von 450 bis 600 Gramm pro Äquivalent auf.

Bevorzugt besitzt eine erfindungsgemäß einzusetzende Epoxid-Verbindung einen Erweichungspunkt nach Mettler gemäß DIN 51920 im Bereich von 0 bis 150°C, besonders bevorzugt 50°C bis 120°C, ganz besonders bevorzugt im Bereich von 60°C bis 110°C und insbesondere im Bereich von 75°C bis 95°C. Der Erweichungspunkt nach Mettler ist die Temperatur, bei der die Probe aus einem zylindrischen Nippel mit einer Ausflussöffnung von 6,35 mm Durchmesser ausfließt, wobei sie eine 19 mm tiefer liegende Lichtschranke unterbricht. Zu diesem Zweck wird die Probe an Luft unter konstanten Bedingungen aufgeheizt

Vorzugsweise einzusetzende Epoxid-Verbindungen weisen ein mittleres Epoxidäquivalent-Gewicht (EEW, Gramm Harz die ein Mol epoxidisch gebundenen Sauerstoff enthalten) via Titration gemäß DIN 16945 im Bereich von 160 bis 2000 g/eq auf, bevorzugt im Bereich von 250 bis 1200 g/eq, besonders bevorzugt im Bereich von 350 bis 1000 g/eq und insbesondere bevorzugt im Bereich von 450 bis 800 g/eq.

Insbesondere bevorzugt wird als Komponente b) ein Poly(Bisphenol A-co-Epichlorhydrin) [CAS Nr. 25068-38-6] eingesetzt, vorzugsweise mit einem durch MALDI-TOF-Massenspektrometrie durch matrixunterstützte Laser-Desorptions/lonisations-Flugzeit-Massenspektrometrie gemäß EN ISO 10927 zu bestimmenden zahlenmittleren Molekulargewicht (Mₙ) im Bereich von 600 bis 1800 g/mol, beispielsweise zu beziehen als Epilox^{®} von Leuna Harze GmbH, Leuna.

Weitere bevorzugte Epoxid-Verbindung mit mindestens 2 Epoxid-Funktionen sind Verbindungen aus der Reihe der Epoxide, kommerziell verfügbar unter den Namen Joncryl^{®} der Fa. BASF AG wie z. B. das Joncryl^{®} 4368 die folgende Einheiten in beliebiger Kombination enthalten 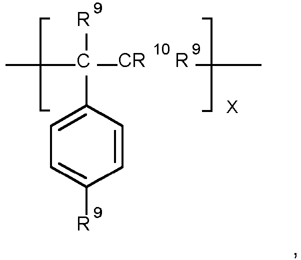 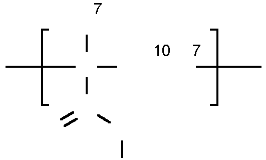 und

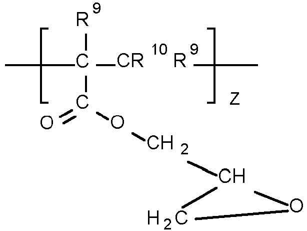

Mit R⁹, R¹⁰ = unabhängig voneinander H, C₁₋C₈ -Alkyl, R¹¹ = unabhängig voneinander C₁-C₈ -Alkyl, x, y = 1 - 20, z = 2 - 20 , wobei Endgruppen R* für H, C₁-C₈ -Alkyl stehen.

Bevorzugt entspricht das Epoxid der Formel (IV)

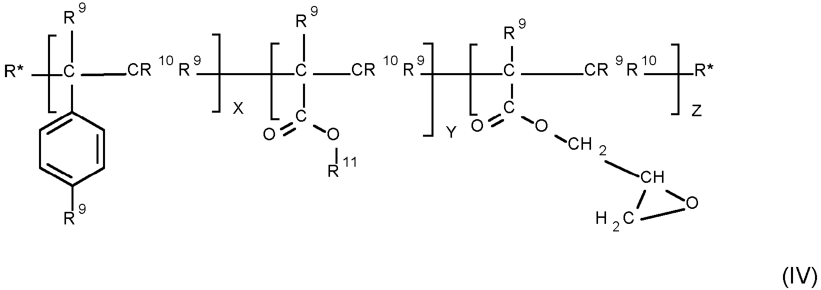

Mit R⁹, R¹⁰ = unabhängig voneinander H, C₁₋C₈ -Alkyl, R¹¹ = unabhängig voneinander C₁-C₈ -Alkyl, x, y = 1 - 20, z = 2 - 20 , wobei als Endgruppen R* mit H, C₁-C₈ -Alkyl stehen .

Bei den thermoplastischen Polyester-basierten Polymeren c) handelt es sich vorzugsweise um Poly-C₁-C₈ -alkylterephthalate, besonders bevorzugt um Polyethylenterephthalat (PET), Polytrimethylenterephthalat (PTT), sowie Copolyester, thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends daraus.

Ganz besonders bevorzugt sind Polylactide (PLA).

In einer bevorzugten Ausführungsform der vorliegenden Erfindung enthält die erfindungsgemäße Zusammensetzung
a) 0,2 bis 2 Gew.-%, bevorzugt 0,4 bis 1,5 Gew.-%, besonders bevorzugt 0,5 bis 1,0 Gew.-%;
b) 0,05 bis 4 Gew.-%, bevorzugt 0,1 bis 2 Gew.-%, besonders bevorzugt 0,5 bis 1,5 Gew.-%;
c) 94 bis 99,75 Gew.-%, bevorzugt 96,5 bis 99,5 Gew.-%, besonders bevorzugt 97,5 bis 99,0 Gew.-%.

In einer weiteren bevorzugten Ausführungsform der vorliegenden Erfindung sind in den Zusammensetzungen neben den Komponenten a), b) und c) keine weiteren Komponenten enthalten, wobei die Summe der Anteile an a), b) und c) 100 Gew.% beträgt.

Gegenstand der vorliegenden Erfindung ist zudem ein Verfahren zur Herstellung der Zusammensetzung, wonach die Komponenten a) und b) in mindestens ein thermoplastisches Polyester-basiertes Polymer c) eingemischt werden. Bevorzugt sind hier Extruder oder Kneter, besonders bevorzugt Extruder. Dabei handelt es sich um handelsübliche Rühr- und Mischaggregate.

In einer bevorzugten Ausführungsform der vorliegenden Erfindung erfolgt die Einmischung der Komponenten a), b) und c) bei Temperaturen von 150 bis 300°C.

In einer weiteren Ausführungsform des erfindungsgemäßen Verfahrens werden weitere Additive, vorzugsweise Nukleierungsmittel, Fasern zur Verstärkung, Schlagzähigkeitsmodifikatoren, Fließverbesserer und/oder UV-Stabilisatoren in die Mischung aus den Komponenten a), b) und c) eingemischt.

Die vorliegende Erfindung betrifft weiterhin ein Verfahren zur Herstellung von hydrolysestabilen Erzeugnissen, indem man Zusammensetzungen enthaltend die Komponenten a), b) und c) in wenigstens einem Mischaggregat, vorzugsweise einem Compounder, zu Formmassen verarbeitet und diese einer Weiterverarbeitung, vorzugsweise einem Spritzgussverfahren oder einer Extrusion zur Herstellung von Erzeugnissen unterzieht.

Erfindungsgemäße Verfahren zur Herstellung von Erzeugnissen durch Extrusion oder Spritzguss werden bei Schmelztemperaturen im Bereich von 160 bis 330°C, bevorzugt im Bereich von 190 bis 300°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar, durchgeführt.

Bei der Extrusion unterscheidet man vorzugsweise in Profilextrusion und sequentielle Coextrusion. Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen **(**Thielen, Hartwig, Gust, "Blasformen von Kunststoffhohlkörpern", Carl Hanser Verlag, München 2006, Seite 127-129**).**

Das Verfahren des Spritzgusses zeichnet sich dadurch aus, dass der Rohstoff, bevorzugt in Granulatform, in einem beheizten zylindrischen Hohlraum aufgeschmolzen (plastifiziert) und als Spritzmasse unter Druck in einen temperierten Hohlraum gespritzt wird. Als Rohstoff werden erfindungsgemäße Zusammensetzungen eingesetzt, die vorzugsweise durch Compoundieren bereits zu einer Formmasse und diese wiederum vorzugsweise zu einem Granulat verarbeitet wurde. Nach dem Abkühlen (Erstarren) der in den temperierten Hohlraum eingespritzten Formmasse wird das Spritzgussteil entformt.

Im Gegensatz zum Spritzguss wird bei der Extrusion ein endlos geformter Kunststoffstrang, hier aus einer erfindungsgemäßen Formmasse, im Extruder eingesetzt, wobei der Extruder eine Maschine zur Herstellung thermoplastischer Formstücke/Erzeugnisse ist. Einsetzbar sind
- Einschneckenextruder und Doppelschneckenextruder sowie die jeweiligen Untergruppen
- konventioneller Einschneckenextruder, förderwirksamer Einschneckenextruder,
- gegenläufiger Doppelschneckenextruder und gleichläufiger Doppelschneckenextruder.

Extrusionsanlagen bestehen vorzugsweise aus Extruder, Werkzeug, Nachfolgeeinrichtung, Extrusionsblasformen. Extrusionsanlagen zum Herstellen von Profilen bestehen vorzugsweise aus: Extruder, Profil-Werkzeug, Kalibrierung, Kühlstrecke, Raupen- und Rollenabzug, Trennvorrichtung und Kipprinne. Extrusionsanlagen zum Herstellen Folien bestehen aus: Extruder, Kühlstrecke, Streckung und Rollenabzug.

Erfindungsgemäß erhältliche Erzeugnisse sind vorzugsweise Materialien die wässrigen Medien, Luftfeuchtigkeit oder Spritzwasser ausgesetzt sind.

Derartig hydrolysestabilisierte Erzeugnisse finden sich insbesondere in Kraftfahrzeugen, in der Elektronik-, Telekommunikations-, Informationstechnologie, oder in der Computerindustrie, sowie im Haushalt, Sport, in der Medizin oder in der Unterhaltungsindustrie. In einer bevorzugten Variante werden die erfindungsgemäßen Zusammensetzungen zur Herstellung von hydrolysestabilen Folien z. B. für Verpackungen oder Solarzellen.

Gegenstand der vorliegenden Erfindung ist zudem die Verwendung der erfindungsgemäßen Zusammensetzung zur Herstellung von Erzeugnissen durch Extrusion, vorzugsweise für Verpackungen oder Solarzellen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

### Eingesetzt wurden:

1) Stab A: ein monomeres Carbodiimid mit einem NCN-Gehalt von ca. 10,8 Gew.% auf Basis von 2,6-Diisopropylphenylisocyanat, erhältlich bei der Lanxess Deutschland GmbH unter dem Namen Stabaxol^{®} I.
2) Stab B: ein polymeres Carbodiimid mit einem NCN-Gehalt von ca. 11,8 Gew.% , D = ca. 1,8 und Mw = 2300 g/mol der Formel (II) mit n = ca. 3 - 4, R⁶, R⁷, R⁸ jeweils unabhängig für Methyl- oder Ethyl steht, wobei jeder Benzolring nur eine Methyl-Gruppe aufweist und R¹ = - NHCOOR⁵ und R⁵ = Cyclohexyl,.
3) Stab C: Ein Epoxid der Formel (III) mit n = im Bereich von 2 - 3 mit einem Epoxidäquivalent-Gewicht (DIN 16945) von 500 bis 700 g/eq und einem Erweichungspunkt (Mettler, DIN 51920) zwischen 75 und 90°C. [CAS Nr. 25068-38-6].
4) Polyethylenterephthalat (PET) erhältlich bei der Firma Novapet.
5) Polymilchsäure (PLA) erhältlich bei der Fa. NatureWorks

### Hydrolyseschutz in Polyethylenterephthalat (PET)

Zur Bewertung der Hydrolyseschutzwirkung in PET wurden die je nach Beispiel eingesetzten Stabilisatoren (Stab A, B sowie C) mittels eines Labordoppelschneckenextruders ZSK 25 der Firma Werner & Pfleiderer vor der unten beschriebenen Messung in PET bei ca. 280 °C eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasserdampf bei einer Temperatur von 110°C gelagert und deren Reißfestigkeit in MPa gemessen.

### Hydrolyseschutz in Polymilchsäure (PLA)

Zur Bewertung der Hydrolyseschutzwirkung in PLA wurden die je nach Beispiel eingesetzten Stabilisatoren (Stab B sowie C) mittels eines Labordoppelschneckenextruders ZSK 25 der Firma Werner & Pfleiderer vor der unten beschriebenen Messung in PLA bei ca. 200 °C eindispergiert. Aus den gewonnenen Granulaten wurden dann die für die Messung der Reißfestigkeit verwendeten F3-Normprüfkörper an einer Spritzgießmaschine des Typs Arburg Allrounder 320 S 150 - 500 hergestellt.

Für den Hydrolysetest wurden diese F3-Normprüfkörper in Wasser bei einer Temperatur von 65°C gelagert und deren Reißfestigkeit in MPa gemessen.

Die Einsatzmengen der Mischungsbestandteile und deren Ergebnisse sind in der Tabelle 1 und 2 aufgelistet:

**Tabelle 1:**

| **Relative Reißfestigkeit (%)** | **Bsp. 1 (vgl.) PET** | **Bsp. 2 (vgl.) PET, 1 % Stab A** | **Bsp. 3 (vgl.) PET, 2 % Stab C** | **Bsp. 4 (vgl.) PET, 4% Stab C** | **Bsp. 5 (vgl.) PET, 1% Stab A, 1,5 % Stab C** |
|---|---|---|---|---|---|
| 0 Tage | 100 | 100 | 100 | 100 | 100 |
| 1 Tag | 75 | 86 | 61 | 63 | 86 |
| 2 Tage | 40 | 80 | 33 | 40 | 81 |
| 3 Tage | 0 | 64 | 0 | 0 | 65 |
| 4 Tage | | 44 | | | 47 |
| 5 Tage | | 30 | | | 38 |

| | | | | | |
|---|---|---|---|---|---|
| vgl. = Vergleichsbeispiel aus DE 10349168, erf.= erfindungsgemäß | | | | | |

**Tabelle 2:**

| **Relative Reißfestigkeit (%)** | **Bsp. 1 (vgl.) PET** | **Bsp. 6 (vgl.) PET, 1 % Stab. B** | **Bsp. 7 (erf.) PET, 1 % Stab B, 1,5 % Stab. C** |
|---|---|---|---|
| 0 Tage | 100 | 100 | 100 |
| 1 Tag | 75 | 86 | 89 |
| 2 Tage | 40 | 83 | 89 |
| 3 Tage | 0 | 76 | 87 |
| 4 Tage | | 60 | 82 |
| 5 Tage | | 40 | 64 |
| 6 Tage | | 18 | 54 |
| 7 Tage | | 0 | 40 |

| | | | |
|---|---|---|---|
| vgl. =Vergleichsbeispiel, erf.= erfindungsgemäß | | | |

**Tabelle 3:**

| **Relative Reißfestigkeit (%)** | **Bsp. 8 (vgl.) PLA** | **Bsp. 9 (vgl.) PLA, 4 % Stab C** | **Bsp. 10 (vgl.) PLA, 0,5 % Stab B** | **Bsp. 11 (erf.) PLA, 0,5% Stab B, 1,5% Stab C** |
|---|---|---|---|---|
| 0 Tage | 100 | 100 | 100 | 100 |
| 1 Tag | 94 | 96 | 98 | 98 |
| 2 Tage | 62 | 79 | 96 | 97 |
| 3 Tage | 22 | 57 | 71 | 97 |
| 4 Tage | 0 | 0 | 44 | 97 |
| 5 Tage | | | 0 | 97 |
| 6 Tag | | | | 97 |
| 7 Tage | | | | 97 |
| 8 Tage | | | | 97 |
| 9 Tage | | | | 97 |
| 10 Tage | | | | 97 |
| 11 Tag | | | | 94 |
| 12 Tage | | | | 88 |
| 13 Tage | | | | 67 |
| 14 Tage | | | | 53 |
| 15 Tage | | | | 28 |
| 16 Tage | | | | 0 |

| | | | | |
|---|---|---|---|---|
| vgl. = Vergleichsbeispiel aus DE 10349168, erf.= erfindungsgemäß | | | | |

Die Prozentangaben in den Tabellen 1 und 2 entsprechen den Gew.%-Anteilen an den entsprechenden Stabilisatoren.

Die Ergebnisse der Hydrolyseschutz-Tests beweisen, dass die Epoxide alleine keinen oder kaum einen stabilisierenden Effekt, überraschenderweise jedoch zusammen mit den erfindungsgemäßen polymeren Carbodiimiden (z. B. Stab. B) einen deutlichen positiven synergistischen Effekt auf die Hydrolysestabilität zeigen. Dagegen führt die Kombination von monomeren Carbodiimiden mit den Epoxiden zu keinem solchen synergistischen Effekt.

## Patentansprüche

1. Zusammensetzung enthaltend
(a) mindestens ein polymeres aromatisches Carbodiimid, der Formel (I)
R¹-R²-(-N=C=N-R²-)ₘ-R¹ (I),
in dem
m einer ganzen Zahl von 2 bis 500, bevorzugt 3 bis 20, ganz besonders bevorzugt 4 bis 10 entspricht,
R² = C₁-C₁₂-Alkyl- substituierte Arylene, C₇-C₁₈-Alkylaryl-substituierte Arylene sowie Arylen,
und
R¹ = -NCO, -NCNR³, -NHCONHR³, -NHCONR³R⁴ oder -NHCOOR⁵ ist,
wobei R³ und R⁴ gleich oder verschieden sind und einen C₁-C₁₂-Alkyl-, C₆-C₁₂-Cycloalkyl-, C₇-C₁₈-Aralkyl- oder Arylrest darstellen und R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen oder ein Alkoxypolyoxyalkylenrest entspricht,
(b) mindestens ein Epoxid der Formel (III), 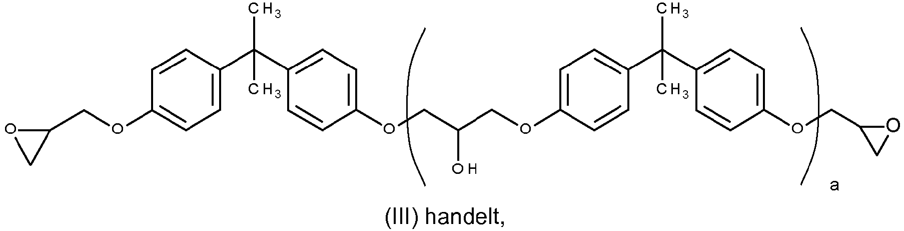 mit a von 0 bis 10, vorzugsweise mit a von 1 bis 8, besonders bevorzugt mit a von 1 bis 6, ganz besonders bevorzugt im Bereich von 2 bis 3, wobei a der durchschnittlichen Anzahl - entspricht und/oder der Formel (IV) 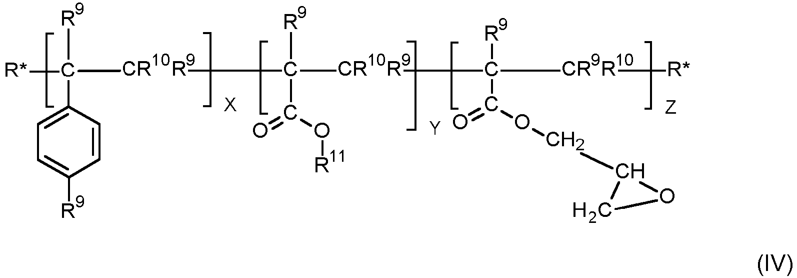
R⁹, R¹⁰ = H, C₁₋C₈ -Alkyl, R¹⁰ = C₁₋C₈ -Alkyl, x, y = 1 - 20 und z = 2 - 20,
und R* = H, C₁₋C₈ -Alkyl
handelt
(c) mindestens ein thermoplastisches Polyester-basiertes Polymer ausgewählt aus der Gruppe Polyethylenterephthalat (PET), Polytrimethylenterephthalat (PTT), thermoplastische Polyester-Elastomere (TPE E), Ethylenvinylacetat (EVA), Polymilchsäure (PLA) und/oder PLA-Derivate, Polybutylensuccinate (PBS), Polyhydroxyalkanoate (PHA), sowie verschiedene Blends, thermoplastische Polyurethane, Polyurethan-Elastomere, PU-Klebstoffe sowie PU-Gießharze.

2. Zusammensetzung nach Anspruch 1 , **dadurch gekennzeichnet, dass** es sich bei den polymeren aromatischen Carbodiimiden um Verbindungen der Formel (II) handelt, 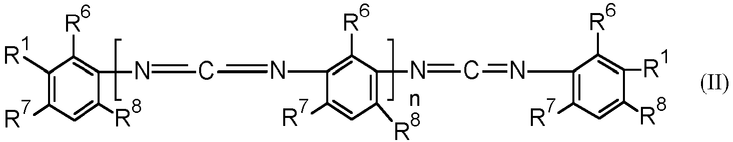
bei denen R¹ ausgewählt ist aus der Gruppe -NCO, -NHCONHR³, -NHCONR³R⁴ oder -NHCOOR⁵ ,
wobei R³ und R⁴ gleich oder verschieden sind und einen C₁-C₁₂-Alkyl-, C₆-C₁₂-Cycloalkyl-, C₇-C₁₈-Aralkylrest- oder Arylrest darstellen,
R⁵ einem C₁-C₂₂-Alkyl-, C₆-C₁₂-Cycloalkyl-, C₆-C₁₈-Aryl oder C₇-C₁₈-Aralkylrest, sowie einem ungesättigten Alkylrest mit 2 - 22 Kohlenstoffatomen, bevorzugt 12 - 20, besonders bevorzugt 16 - 18 Kohlenstoffatomen, oder einem Alkoxypolyoxyalkylenrest entspricht, und
R⁶, R⁷ und R⁸ jeweils unabhängig für Methyl- oder Ethyl steht, wobei jeder Benzolring nur eine Methyl-Gruppe aufweist und n = 1 bis 10 bedeutet.

3. Zusammensetzung nach einem der Ansprüche 1 bis 2, **dadurch gekennzeichnet, dass** diese a), b) und c) in folgenden Anteilen enthält:
a) 0,2 - 2 Gew. %, bevorzugt 0,4 - 1,5 Gew. % besonders bevorzugt 0,5 - 1,0 Gew.%;
b) 0,05 - 4 Gew. %, bevorzugt 0,1 - 2 Gew. % besonders bevorzugt 0,5 - 1,5 Gew.%;
c) 94 - 99,75 Gew. %, bevorzugt 96,5 - 99,5 Gew. % besonders bevorzugt 97,5 - 99,0 Gew. % .

4. Verfahren zur Herstellung einer Zusammensetzung nach einem der Ansprüche 1 bis 3, **dadurch gekennzeichnet, dass** die Komponenten a), b) in mindestens ein thermoplastisches Polyester-basiertes Polymer c) eingemischt werden.

5. Verfahren zur Herstellung einer Zusammensetzung nach Anspruch 4, **dadurch gekennzeichnet, dass** die Komponenten a), b) in mindestens ein thermoplastisches Polyester-basiertes Polymer c) bei Temperarturen von 160 - 330 °C eingemischt werden.

6. Erzeugnisse, vorzugsweise hydrolysestabile Erzeugnisse, erhältlich durch Einmischen der Zusammensetzungen nach einem der Ansprüche 1 bis 3, in wenigstens einem Mischaggregat, vorzugsweise einem Compounder, und der Weiterverarbeitung zu Formmassen in Spritzgussverfahren oder mittels Extrusion.

7. Verwendung der Zusammensetzung nach einem der Ansprüche 1 bis 3 zur Herstellung von Erzeugnissen durch Extrusion, vorzugsweise für Verpackungen oder Solarzellen.

## Claims

1. Composition containing
(a) at least one polymeric aromatic carbodiimide of formula (I)
R¹-R²-(-N=C=N-R²-)ₘ-R¹ (I),
in which
m represents an integer from 2 to 500, preferably 3 to 20, very particularly preferably 4 to 10,
R² = C₁-C₁₂-alkyl-substituted arylenes, C₇-C₁₈-alkylaryl-substituted arylenes and also arylene,
and
R¹ = -NCO, -NCNR³, -NHCONHR³, -NHCONR³R⁴ or -NHCOOR⁵,
wherein R³ and R⁴ are identical or different and represent a C₁-C₁₂-alkyl, C₆-C₁₂-cycloalkyl, C₇-C₁₈-aralkyl or aryl radical and R⁵ represents a C₁-C₂₂-alkyl, C₆-C₁₂-cycloalkyl, C₆-C18-aryl or C₇-C₁₈-aralkyl radical and an unsaturated alkyl radical having 2 - 22 carbon atoms or an alkoxypolyoxyalkylene radical,
(b) at least one epoxide of formula (III) 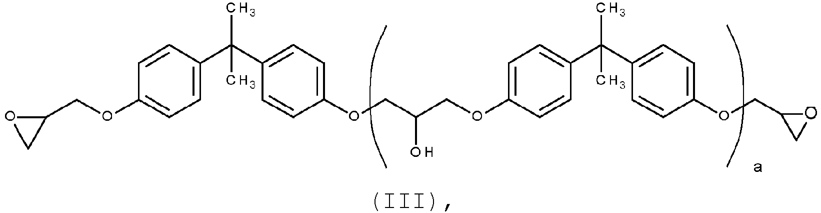 where a is 0 to 10, preferably where a is 1 to 8, particularly preferably where a is 1 to 6, very particularly preferably in the range from 2 to 3, wherein a represents the average number and/or of formula (IV) 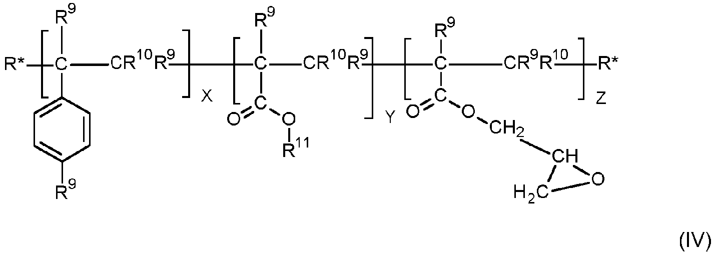
where R⁹, R¹⁰ = H, C₁-C₈-alkyl, R¹⁰ = C₁-C₈-alkyl, x, y = 1 - 20 and z = 2 - 20,
and R* = H, C₁-C₈-alkyl,
(c) at least one thermoplastic polyester-based polymer selected from the group polyethylene terephthalate (PET), polytrimethylene terephthalate (PTT), thermoplastic polyester elastomers (TPE E), ethylene vinyl acetate (EVA), polylactic acid (PLA) and/or PLA derivatives, polybutylene succinates (PBS), polyhydroxyalkanoates (PHA), and various blends, thermoplastic polyurethanes, polyurethane elastomers, PU adhesives and PU casting resins.

2. Composition according to Claim 1, **characterized in that** the polymeric aromatic carbodiimides are compounds of formula (II) 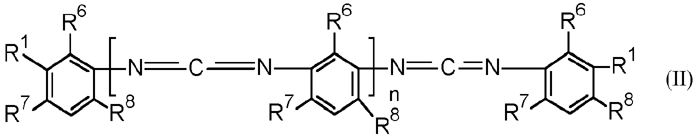
where R¹ is selected from the group of -NCO, -NHCONHR³, - NHCONR³R⁴ or -NHCOOR⁵,
where R³ and R⁴ are identical or different and represent a C₁-C₁₂-alkyl, C₆-C₁₂-cycloalkyl, C₇-C₁₈-aralkyl radical or aryl radical,
R⁵ represents a C₁-C₂₂-alkyl, C₆-C₁₂-cycloalkyl, C₆-C₁₈-aryl or C₇-C₁₈-aralkyl radical and an unsaturated alkyl radical having 2 - 22 carbon atoms, preferably 12 - 20, particularly preferably 16 - 18 carbon atoms, or an alkoxypolyoxyalkylene radical and
R⁶, R⁷ and R⁸ each independently represent methyl or ethyl, wherein each benzene ring bears only one methyl group and n = 1 to 10.

3. Composition according to either of Claims 1 to 2, **characterized in that** it comprises a), b) and c) in the following proportions:
a) 0.2 - 2% by weight, preferably 0.4 - 1.5% by weight, particularly preferably 0.5 - 1.0% by weight,
b) 0.05 - 4% by weight, preferably 0.1 - 2% by weight, particularly preferably 0.5 - 1.5% by weight,
c) 94 - 99.75% by weight, preferably 96.5 - 99.5% by weight, particularly preferably 97.5 - 99.0% by weight.

4. Process for producing a composition according to any of Claims 1 to 3, **characterized in that** the components a), b) are admixed into at least one thermoplastic polyester-based polymer c) .

5. Process for producing a composition according to Claim 4, **characterized in that** the components a), b) are admixed into at least one thermoplastic polyester-based polymer c) at temperatures of 160 - 330°C.

6. Articles of manufacture, preferably hydrolysis-stable articles of manufacture, obtainable by admixing the compositions according to any of Claims 1 to 3 in at least one mixing assembly, preferably a compounder, and further processing to afford moulding materials in injection moulding processes or by extrusion.

7. Use of the composition according to any of Claims 1 to 3 for producing articles of manufacture by extrusion, preferably for packaging or solar cells.

## Revendications

1. Composition contenant
(a) au moins un carbodiimide aromatique polymère de formule (I)
R¹-R²-(-N=C=N-R²-)ₘ-R¹ (I),
dans laquelle
m correspond à un nombre entier de 2 à 500, de préférence de 3 à 20, de manière tout particulièrement préférée de 4 à 10 et
R² = arylènes substitués par C₁-C₁₂-alkyle, arylènes substitués par C₇-C₁₈-alkylaryle ainsi qu'arylène,
et
R¹ = -NCO, -NCNR³, -NHCONHR³, -NHCONR³R⁴ ou -NHCOOR⁵,
R³ et R⁴ étant identiques ou différents et représentant un radical C₁-C₁₂-alkyle, C₆-C₁₂-cycloalkyle, C₇-C₁₈-aralkyle ou aryle et R⁵ correspondant à un radical C₁-C₂₂-alkyle, C₆-C₁₂-cycloalkyle, C₆-C₁₈-aryle ou C₇-C₁₈-aralkyle ainsi qu'à un radical alkyle insaturé comprenant 2-22 atomes de carbone ou un radical alcoxypolyoxyalkylène,
(b) au moins un époxyde de formule (III), 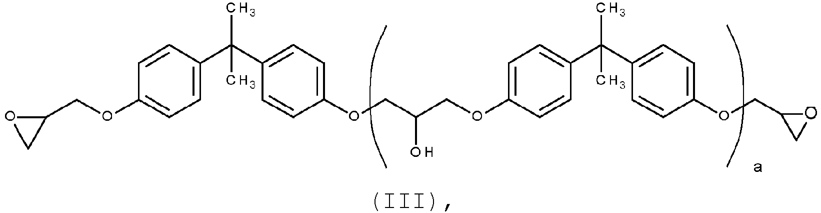 dans laquelle a vaut 0 à 10, de préférence a vaut 1 à 8, de manière particulièrement préférée a vaut 1 à 6, de manière tout particulièrement préférée dans la plage de 2 à 3, a correspondant au nombre moyen et/ou de formule (IV) 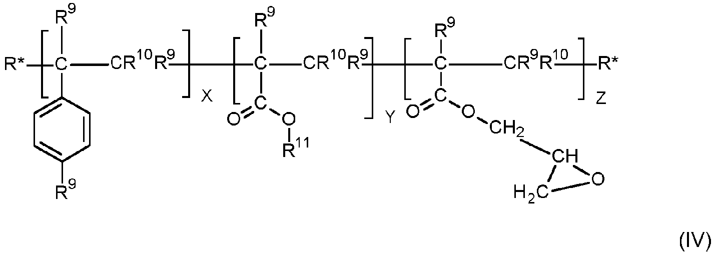
R⁹, R¹⁰ = H, C₁₋₈-alkyle, R¹⁰ = C₁-C₈-alkyle, x, y = 1 - 20 et z = 2 - 20,
et R*= H, C₁-C₈-alkyle
,
(c) au moins un polymère à base d'un polyester thermoplastique choisi dans le groupe formé par poly(téréphtalate d'éthylène (PET), poly(téréphtalate de triméthylène) (PTT), élastomères de polyester thermoplastique (TPE E), éthylène-acétate de vinyle (EVA), acide polylactique (PLA) et/ou dérivés de PLA, poly(succinate de butylène) (PBS), polyhydroxyalcanoates (PHA), ainsi que différents mélanges, polyuréthanes thermoplastiques, élastomères de polyuréthane, colles de PU ainsi que résines coulées de PU.

2. Composition selon la revendication 1, **caractérisée en ce qu'**il s'agit, pour les carbodiimides aromatiques polymères, de composés de formule (II), 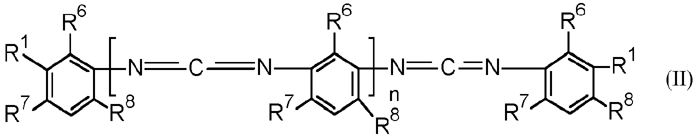
dans laquelle R¹ est choisi dans le groupe formé par - NCO, -NHCONHR³, -NHCONR³R⁴ ou -NHCOOR⁵,
R³ et R⁴ étant identiques ou différents et représentant un radical C₁-C₁₂-alkyle, C₆-C₁₂-cycloalkyle, C₇-C₁₈-aralkyle ou aryle,
R⁵ correspondant à un radical C₁-C₂₂-alkyle, C₆-C₁₂-cycloalkyle, C₆-C₁₈-aryle ou C₇-C₁₈-aralkyle ainsi qu'à un radical alkyle insaturé comprenant 2 - 22 atomes de carbone, de préférence 12 - 20, de manière particulièrement préférée 16 - 18 atomes de carbone, ou à un radical alcoxypolyoxyalkylène et
R⁶, R⁷ et R⁸ représentent, à chaque fois indépendamment, méthyle ou éthyle, chaque cycle benzène ne présentant qu'un groupe méthyle et n = 1 à 10.

3. Composition selon l'une des revendications 1 à 2, **caractérisée en ce que** celle-ci contient a), b) et c) aux proportions suivantes :
a) 0,2 - 2% en poids, de préférence 0,4 - 1,5% en poids, de manière particulièrement préférée 0,5 - 1,0% en poids ;
b) 0,05 - 4% en poids, de préférence 0,1 - 2% en poids, de manière particulièrement préférée 0,5 - 1,5% en poids ;
c) 94 - 99,75% en poids, de préférence 96,5 - 99,5% en poids, de manière particulièrement préférée 97,5 - 99,0% en poids.

4. Procédé de préparation d'une composition selon l'une des revendications 1 à 3, **caractérisé en ce que** les composés a), b) sont incorporés en mélangeant dans au moins un polymère c) à base d'un polyester thermoplastique.

5. Procédé de préparation d'une composition selon la revendication 4, **caractérisé en ce que** les composés a), b) sont incorporés en mélangeant dans au moins un polymère c) à base d'un polyester thermoplastique à des températures de 160 - 330°C.

6. Produits, de préférence produits stables à l'hydrolyse, pouvant être obtenus par incorporation en mélangeant des compositions selon l'une des revendications 1 à 3, dans au moins un appareil de mélange, de préférence un mélangeur, et traitement ultérieur en masses de moulage dans un procédé de moulage par injection ou par extrusion.

7. Utilisation de la composition selon l'une des revendications 1 à 3 pour la fabrication de produits par extrusion, de préférence pour des emballages ou des cellules solaires.
